# FASCICULE DE BREVET EUROPEEN

(11) **EP 2 410 536 B1**
(45) Date de publication et mention de la délivrance du brevet: **07.05.2014**
(21) Numéro de dépôt: 11174574.1
(22) Date de dépôt: 19.07.2011
(51) Int. Cl.: H01B 13/012, G06F 17/50, B60R 16/02

(54) **Procédé de modélisation d'un câblage électrique susceptible d'adopter différentes configurations**
Verfahren zur Modellierung einer elektrischen Verkabelung, die geeignet ist, verschiedene Konfigurationen anzunehmen
Procedure for modelling a wiring harness suitable to adopt various configurations

(30) Priorité: 23.07.2010 FR 1056032
(43) Date de publication de la demande: 25.01.2012
(73) Titulaire: Leoni Wiring Systems France, 78180 Montigny le Bretonneux (FR)
(72) Inventeur: Chretien, Louis, 92500 RUEIL-MALMAISON (FR)
(74) Mandataire: de la Bigne, Guillaume Michel Marie

(56) Documents cités:
- EP-A2- 1 205 862
- EP-A2- 1 236 989
- FR-A1- 2 925 428
- US-A1- 2007 067 750

## Description

La présente invention concerne le domaine technique de la fabrication d'un câblage électrique pour véhicule et plus particulièrement de sa modélisation en vue de son assemblage et de son montage dans un véhicule automobile.

Un câblage électrique pour véhicule comprend un faisceau de conducteurs électriques et des éléments distincts de ce faisceau tels que des agrafes de fixation du faisceau au corps du véhicule, des goulottes de guidage d'une branche du faisceau, des connecteurs électriques d'extrémité d'une branche du faisceau, etc..

Le câblage est monté dans le véhicule automobile dans une configuration que l'on appelle configuration spatiale opérationnelle.

Il est connu de FR 2 925 428 de réaliser le modèle numérique du câblage dans la configuration spatiale opérationnelle, en modélisant le faisceau par au moins un objet numérique d'un type défini comme étant déformable et les éléments distincts du faisceau par au moins un objet numérique d'un type défini comme étant indéformable.

Habituellement, l'assemblage des différents éléments du câblage est réalisé à l'aide d'une planche d'assemblage. Cette planche d'assemblage comprend notamment des éléments de positionnement du câblage selon une configuration spatiale sensiblement plane, ce qui permet notamment de faciliter l'assemblage du câblage par un opérateur.

Généralement, la planche est fabriquée à partir de données d'un modèle numérique du câblage dans sa configuration spatiale plane. Ce modèle numérique est obtenu à partir du modèle numérique du câblage dans sa configuration spatiale opérationnelle.

Une fois fabriqué, le câblage est ensuite envoyé chez le constructeur de véhicule automobile pour être monté dans le véhicule. Lors de l'envoi, le câblage est mis dans une troisième configuration, à savoir une configuration de rangement dans un emballage.

Le câblage doit donc être apte à prendre l'une quelconque de ces trois configurations.

Une fois le câblage assemblé sur la planche selon la configuration spatiale plane, on passe de la configuration plane à la configuration opérationnelle par déformation du câblage.

Or, lors de ce passage, l'opérateur est souvent confronté à des difficultés de montage du câblage dans le véhicule liées notamment au fait que les déformations théoriquement nécessaires pour passer de la configuration plane à la configuration opérationnelle vont au-delà des déformations tolérables par le faisceau. Dans ce cas, il est alors difficile, voire impossible d'obtenir la configuration spatiale opérationnelle souhaitée initialement.

Il est alors nécessaire de revenir à la configuration plane d'assemblage du câblage et de procéder à des modifications de cette configuration et ce jusqu'à obtenir, après un nombre d'itérations relativement important, une configuration plane du câblage pouvant être déformée de façon à aboutir à une configuration opérationnelle acceptable.

Cependant, le modèle numérique du câblage dans sa configuration spatiale opérationnelle ne tient pas compte des modifications apportées à la configuration spatiale plane ce qui rend ce procédé de modification long et fastidieux.

Ceci conduit notamment à une perte de temps et éventuellement à des erreurs d'assemblage rendant parfois impossible le montage du câblage dans le véhicule automobile.

L'invention a notamment pour but de proposer un procédé de modélisation du câblage qui permette de réduire le nombre d'échecs lors du montage du câblage dans le véhicule.

A cet effet, l'invention a pour objet un procédé de modélisation d'un câblage électrique pour véhicule automobile, le câblage comprenant un faisceau de conducteurs électriques et au moins un élément distinct, le câblage pouvant être agencé dans au moins deux configurations spatiales différentes, procédé dans lequel on définit une base de données d'objets numériques représentant les différents éléments du câblage caractérisé en ce que les données numériques relatives aux objets numériques étant classés selon :
- une première classe comprenant les données indépendantes du câblage,
- une deuxième classe comprenant les données propres au câblage et communes à toutes les configurations,
- une troisième classe comprenant les données propres au câblage et à une configuration.

Ainsi, lorsque l'on modifie un objet numérique appartenant au deuxième type, les modifications apportées dans une configuration impliqueront des modifications dans l'autre configuration. En revanche, si l'on modifie un objet numérique appartenant au troisième type dans une configuration, l'autre configuration du faisceau de câbles demeurera inchangée.

La première classe permet de tenir compte des éléments du câblage qui pourraient être utilisés dans d'autres câblages. Ainsi, si pour une raison quelconque, on vient à devoir modifier un élément appartenant à cette classe, toute modélisation d'un câblage en tiendra compte.

Cette approche permet donc de prévoir l'impact, sur une configuration du câblage, de modifications apportées dans une autre configuration. L'impact peut être nul. Cette approche permet de réduire le risque d'échecs lorsque l'on passe d'une configuration du câblage à une autre.

Un procédé de modélisation selon l'invention peut en outre comporter l'une ou plusieurs des caractéristiques additionnelles suivantes :
- la deuxième classe comprend deux sous-classes :
- une première sous-classe comprenant les données relatives à des objets numériques d'un type défini comme indéformable,
- une seconde sous-classe comprenant les données relatives à des objets numériques d'un type défini comme déformable.

Cette deuxième classe comprend principalement les données relatives aux objets numériques modélisant le faisceau de conducteurs, généralement modélisé par des objets numériques du type déformable, mais, certaines parties du faisceau subissent des contraintes mécaniques critiques lors du passage d'une configuration à l'autre, il est alors plus réaliste de les modéliser par des objets numériques du type indéformable. Bien que modélisés par des objets numériques du type indéformable, les données numériques de ces objets numériques sont propres au câblage. En effet, la géométrie et l'emplacement de ces objets notamment, sont spécifiques à des contraintes données pouvant varier d'un câblage électrique à un autre.
- la première classe comprend les données choisies parmi des dimensions d'un connecteur, des dimensions d'un élément de fixation, des dimensions d'un élément de passage de cloison.
- la deuxième classe comprend les données choisies parmi la longueur d'un conducteur électrique, l'adresse de départ d'un conducteur électrique, l'adresse d'arrivée d'un conducteur électrique, les dimensions d'une jonction de conducteurs électriques, la localisation d'une jonction sur un faisceau, la localisation d'un élément de fixation sur un faisceau, la localisation d'un élément de passage de cloison sur un faisceau, les longueurs et diamètres de sections du faisceau, la notion de conducteur étant applicable à un conducteur unique comme à un faisceau de conducteurs ayant au moins une adresse en commun.
- la troisième classe comprend les données choisies parmi les coordonnées spatiales d'un connecteur, d'un élément de fixation, d'un élément de passage de cloison, dans chacune des configurations spatiales.
- on réalise un modèle numérique du câblage électrique dans chacune des configurations spatiales.

Ainsi, cette base de données des objets numériques unique à partir de laquelle on peut réaliser un modèle numérique du câblage dans chacune des configurations spatiales évite, par exemple, que l'on oublie de répercuter des modifications apportées à des éléments d'une configuration à l'autre, comme cela pouvait être le cas lorsque les modèles numériques étaient indépendants les uns des autres.

Cela évite également de nombreux aller-retour entre plusieurs modèles numériques afin de vérifier la compatibilité des câblages modélisés par chacun des modèles dans une configuration différente.

On réalise ainsi, par exemple, le modèle permettant de construire le câblage électrique dans une configuration sensiblement plane tout en ayant vérifié que ce câblage sera également compatible avec la configuration opérationnelle.

Suivant des caractéristiques optionnelles du procédé selon l'invention :
- les configurations sont choisies parmi une configuration spatiale opérationnelle dans un véhicule automobile, une configuration de montage sur une planche de montage et une configuration de rangement dans un emballage ;
- on réalise un modèle numérique de câblage dans une configuration spatiale à l'aide d'un programme d'ordinateur.

L'invention a en outre pour objet un procédé de fabrication d'un câblage électrique pour véhicule automobile, caractérisé en ce qu'on définit le câblage électrique à partir de données des modèles numériques de chaque configuration obtenues par le procédé selon l'invention.

On notera que l'invention concerne tant les véhicules automobiles terrestres qu'aériens ou maritimes.

L'invention sera mieux comprise à la lecture de la description qui va suivre, donnée uniquement à titre d'exemple et faite en se référant aux dessins dans lesquels :
- la figure 1 est une vue du câblage électrique pour véhicule automobile dans une configuration spatiale opérationnelle ;
- la figure 2 est une vue d'une partie du câblage électrique de la figure 1 dans une configuration sensiblement plane.

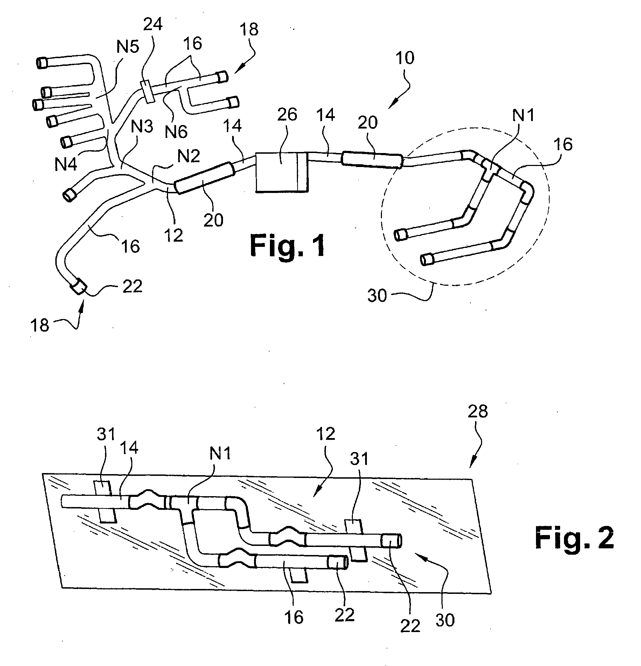

On a représenté sur la figure 1 un câblage électrique pour véhicule automobile. Ce câblage électrique est désigné par la référence générale 10. Sur la figure 1, le câblage 10 est représenté dans une configuration spatiale opérationnelle, c'est-à-dire une configuration d'utilisation du câblage dans le véhicule.

Le câblage 10 comprend un faisceau 12 de conducteurs électriques. Le faisceau 12 comprend une pluralité de branches. Chaque branche comporte des fils conducteurs électriques isolés chacun par une gaine isolante. L'ensemble des fils conducteurs de chaque branche définit un diamètre de cette branche. En particulier, le faisceau 12 comprend deux branches principales 14 comprenant par exemple plus de quarante fils auxquelles sont raccordées des branches secondaires 16 comprenant par exemple moins de quarante fils, le diamètre des branches principales 14 étant supérieur au diamètre des branches secondaires 16. Ces branches secondaires 16 sont raccordées aux branches principales 14 par des noeuds de dérivation N. On compte sur cette figure six noeuds de dérivation N1 à N6.

Le câblage électrique 10 comprend également au moins un élément 18 distinct du faisceau 12. Par exemple, dans l'exemple illustré sur la figure 1, on voit que le câblage 10 comprend deux goulottes 20 de guidage des deux branches principales 14 du faisceau 12, une pluralité de connecteurs 22 d'extrémité des branches secondaires 16 du faisceau 12, un organe 24 de fixation d'une branche secondaire 16 du faisceau au véhicule automobile telle qu'une agrafe de fixation et encore un organe 26 de raccordement des branches principales 14 du faisceau 12 entre elles. Dans cet exemple, l'organe 26 de raccordement est un boîtier de connexion électrique classique.

On a représenté à la figure 2, une partie du câblage 10 assemblé sur une planche d'assemblage 28 dans une configuration spatiale sensiblement plane.

Sur cette figure, on a représenté seulement une partie 30 du câblage 10 (figure 1). En particulier, cette partie 30 du câblage 10 comprend une branche principale 14 et deux branches secondaires 16 raccordées à la branche principale 14 par le noeud de dérivation N1. La planche d'assemblage 28 comprend également des supports 31 de positionnement de la partie 30 du câblage sur la planche 28.

La planche 28 est construite à partir d'un modèle numérique du câblage dans une configuration sensiblement plane.

Ainsi, lorsque l'on désire fabriquer le câblage électrique 10, on réalise un premier modèle numérique en configuration spatiale opérationnelle, dans lequel chaque élément du câblage est modélisé par un objet numérique.

Les données numériques relatives aux objets numériques sont classées dans une base de données unique pour toutes les configurations envisagées du câblage selon trois classes : une première classe qui comprend les données indépendantes du câblage, une deuxième classe qui comprend les données propres au câblage et communes à toutes les configurations et une troisième classe qui comprend les données propres au câblage et à une configuration donnée.

La deuxième classe peut comprendre deux sous-classes : une première sous-classe qui comprend les données relatives à des objets numériques d'un type défini comme indéformable et une seconde sous-classe qui comprend les données relatives à des objets numériques d'un type défini comme déformable.

Ainsi, on regroupe dans la première classe les données relatives aux dimensions d'un connecteur, aux dimensions d'un élément de fixations, aux dimensions d'un élément de passage de cloison, par exemple.

On regroupe dans la première sous-classe notamment les données relatives aux parties du faisceau qui sont modélisées par des objets numériques du type indéformable, a savoir : les dimensions d'une jonction de faisceau, la localisation de la jonction sur un faisceau, la localisation d'un élément de fixation sur un faisceau, la localisation d'un élément de passage de cloison sur un faisceau.

La seconde sous-classe comprend, par exemple, la longueur d'un conducteur électrique, l'adresse de départ d'un conducteur électrique, l'adresse d'arrivée d'un conducteur électrique, les longueurs et les diamètres des parties du faisceau.

On entend par adresse de départ et d'arrivée d'un conducteur électrique, non pas les coordonnées dans un système de référence des extrémités du conducteur, mais bien une identification des éléments auxquels le conducteur est raccordé.

Enfin, on regroupe dans la troisième classe par exemple les coordonnées spatiales, dans chacune des configurations spatiales, d'un connecteur, d'un élément de fixation, d'un élément de passage de cloison.

A partir de ces données numériques centralisées dans une base de données unique, on réalise un modèle numérique du câblage dans chacune de ses configurations spatiales.

Ensuite, si on désire, pour une raison quelconque, modifier un élément du câblage électrique dans une configuration donnée, on modifie les données relatives à cet élément dans la base de données et on réalise à nouveau un modèle numérique du câblage électrique dans chacune des configurations spatiales. Dans le cas présenté sur les figures, on réalise un modèle numérique du câblage en configuration opérationnelle et en configuration de montage sur une planche de montage. On peut évidemment réaliser également un modèle numérique du câblage en configuration de rangement dans un emballage ou en toute autre configuration prise par le câblage.

Le procédé de modélisation selon l'invention est avantageusement réalisé à l'aide d'un programme d'ordinateur.

Ainsi, grâce aux modèles numériques du câblage dans chaque configuration, on peut fabriquer un câblage électrique dans une configuration donnée tout en minimisant les risques d'échec lors du passage du câblage d'une configuration à l'autre.

## Revendications

1. Procédé de modélisation d'un câblage électrique (10) pour véhicule automobile, le câblage comprenant un faisceau (12) de conducteurs électriques et au moins un élément distinct (18), le câblage (10) pouvant être agencé dans au moins deux configurations spatiales différentes, procédé dans lequel on définit une base de données d'objets numériques (14, 16, 18, 20, 22. 24, 26. 31, N1, N2, N3, N4, N5, N6) représentant les différents éléments (14, 16, 18, 20, 22, 24, 26, 31, N1, N2, N3, N4, N5, N6) du câblage, **caractérisé en ce que** les données numériques relatives aux objets numériques étant classées selon :
- une première classe comprenant les données indépendantes du câblage,
- une deuxième classe comprenant les données propres au câblage et communes à toutes les configurations,
- une troisième classe comprenant les données propres au câblage et à une configuration.

2. Procédé selon la revendication précédente, dans lequel la deuxième classe comprend deux sous-classes :
- une première sous-classe comprenant les données relatives à des objets numériques d'un type défini comme indéformable,
- une seconde sous-classe comprenant les données relatives à des objets numériques d'un type défini comme déformable.

3. Procédé selon l'une quelconque des revendications précédentes, dans lequel la première classe comprend les données choisies parmi des dimensions d'un connecteur, des dimensions d'un élément de fixation, des dimensions d'un élément de passage de cloison.

4. Procédé selon l'une quelconque des revendication précédentes, dans lequel la deuxième classe comprend les données choisies parmi la longueur d'un conducteur électrique, l'adresse de départ d'un conducteur électrique, l'adresse d'arrivée d'un conducteur électrique, les dimensions d'une jonction de conducteurs électriques, la localisation de la jonction sur un faisceau, la localisation d'un élément de fixation sur un faisceau, la localisation d'un élément de passage de cloison sur un faisceau, les longueurs et diamètres des parties du faisceau.

5. Procédé selon l'une quelconque des revendications précédentes, dans lequel la troisième classe comprend les données choisies parmi les coordonnées spatiales d'un connecteur, d'un élément de connexion, d'un élément de passage de cloison, dans chacune des configurations spatiales.

6. Procédé selon l'une quelconque des revendications précédentes, dans lequel on réalise un modèle numérique du câblage électrique (10) dans chacune des configurations spatiales.

7. Procédé selon l'une quelconque des revendications précédentes, dans lequel les configurations sont choisies parmi une configuration spatiale opérationnelle dans un véhicule automobile, une configuration de montage sur une planche de montage et une configuration de rangement dans un emballage.

8. Procédé selon l'une quelconque des revendications précédentes, dans lequel on réalise un modèle numérique de câblage (10) dans une configuration spatiale à l'aide d'un programme d'ordinateur.

9. Procédé de fabrication d'un câblage électrique (10) pour véhicule automobile, **caractérisé en ce qu'**on définit le câblage électrique (10) à partir de données des modèles numériques de chaque configuration obtenues par le procédé d'une quelconque des revendications 1 à 8.

## Patentansprüche

1. Verfahren zur Modellierung einer elektrischen Verkabelung (10) für ein Kraftfahrzeug, wobei die Verkabelung ein Bündel (12) elektrischer Leiter und mindestens ein anderes Element (18) aufweist, wobei die Verkabelung (10) in mindestens zwei unterschiedlichen räumlichen Konfigurationen angeordnet werden kann,
wobei bei dem Verfahren eine Datenbank numerischer Objekte (14, 16, 18, 20, 22, 24, 26, 31, N1, N2, N3, N4, N5, N6) definiert wird, welche die verschiedenen Elemente (14, 16, 18, 20, 22, 24, 26, 31, N1, N2, N3, N4, N5, N6) der Verkabelung repräsentieren, **dadurch gekennzeichnet, dass** die numerischen Daten über die numerischen Objekte eingestuft sind in:
- eine erste Klasse, welche die unabhängigen Daten der Verkabelung umfasst,
- eine zweite Klasse, welche die der Verkabelung zugehörigen und allen Konfigurationen gemeinen Daten umfasst,
- eine dritte Klasse, welche die der Verkabelung und einer Konfiguration zugehörigen Daten umfasst.

2. Verfahren nach dem vorhergehenden Anspruch, bei dem die zweite Klasse zwei Unterklassen umfasst:
- eine erste Unterklasse, welche die Daten über numerische Objekte eines Typs umfasst, der als unverformbar definiert ist,
- eine zweite Unterklasse, welche die Daten über numerische Objekte eines Typs umfasst, der als verformbar definiert ist.

3. Verfahren nach einem der vorhergehenden Ansprüche, bei dem die erste Klasse die Daten umfasst, die ausgewählt sind aus den Abmessungen eines Steckverbinders, den Abmessungen eines Befestigungselements, den Abmessungen eines Trennwanddurchführungselements.

4. Verfahren nach einem der vorhergehenden Ansprüche, bei dem die zweite Klasse die Daten umfasst, die ausgewählt sind aus der Länge eines elektrischen Leiters, der Abgangsadresse eines elektrischen Leiters, der Eingangsadresse eines elektrischen Leiters, den Abmessungen einer Verbindung elektrischer Leiter, der Ortsbestimmung der Verbindung an einem Bündel, der Ortsbestimmung eines Befestigungselements an einem Bündel, der Ortsbestimmung eines Trennwanddurchführungselements an einem Bündel, den Längen und Durchmessern der Teile des Bündels.

5. Verfahren nach einem der vorhergehenden Ansprüche, bei dem die dritte Klasse die Daten umfasst, die ausgewählt sind aus den räumlichen Koordinaten eines Steckverbinders, eines Verbindungselements, eines Trennwanddurchführungselements, in jeder der räumlichen Konfigurationen.

6. Verfahren nach einem der vorhergehenden Ansprüche, bei dem ein numerisches Modell der elektrischen Verkabelung (10) in jeder der räumlichen Konfigurationen realisiert wird.

7. Verfahren nach einem der vorhergehenden Ansprüche, bei dem die Konfigurationen ausgewählt sind aus einer räumlichen Konfiguration für den Betrieb in einem Kraftfahrzeug, einer Konfiguration für die Montage auf einem Montagebrett und einer Konfiguration für das Verstauen in einer Verpackung.

8. Verfahren nach einem der vorhergehenden Ansprüche, bei dem ein numerisches Verkabelungsmodell (10) in einer räumlichen Konfiguration mit Hilfe eines Computerprogramms realisiert wird.

9. Verfahren zum Herstellen einer elektrischen Verkabelung (10) für Kraftfahrzeug, **dadurch gekennzeichnet, dass** die elektrische Verkabelung (10) ausgehend von Daten der numerischen Modelle jeder Konfiguration definiert wird, die durch das Verfahren eines der Ansprüche 1 bis 8 erhalten wurden.

## Claims

1. A method of modeling an electrical harness (10) for a motor vehicle, the harness comprising a bundle (12) of electrical conductors and at least one distinct element (18), the harness (10) being capable of being arranged in at least two different three-dimensional configurations, in which method a database of digital objects (14, 16, 18, 20, 22, 24, 26, 31, N1, N2, N3, N4, N5, N6) is defined representing the various elements (14, 16, 18, 20, 22, 24, 26, 31, N1, N2, N3, N4, N5, N6) of the harness, the method being **characterized in that** the digital data relating to the digital objects is classified in:
• a first class comprising data independent of the harness;
• a second class comprising data specific to the harness and common to all of the configurations;
• a third class comprising data specific to the harness and common to one of the configurations.

2. A method according to the preceding claim, wherein the second class comprises two subclasses:
• a first subclass comprising data relating to digital objects of a type defined as being undeformable; and
• a second subclass comprising data relating to digital objects of a type defined as being deformable.

3. A method according to any preceding claim, wherein the first class comprises data selected from dimensions of a connector, dimensions of a fastener element, and dimensions of an element for passing through a partition.

4. A method according to any preceding claim, wherein the second class comprises data selected from the length of an electrical conductor, the starting address of an electrical conductor, the ending address of an electrical conductor, the dimensions of an electrical conductor junction, the location of the junction on a bundle, the location of a fastener element on a bundle, the location of an element for passing through a partition on a bundle, and the lengths and diameters of portions of the bundle.

5. A method according to any preceding claim, wherein the third class comprises data selected from the three-dimensional coordinates of a connector, of a connection element, or of an element for passing through a partition, in each of the three-dimensional configurations.

6. A method according to any preceding claim, wherein a digital model is made of the electrical harness (10) in each of the three-dimensional configurations.

7. A method according to any preceding claim, wherein the configurations are selected from an operational three-dimensional configuration in a motor vehicle, an assembly configuration on an assembly panel, and a storage configuration in packaging.

8. A method according to any preceding claim, wherein a digital model of the harness (10) is made in a three-dimensional configuration with the help of a computer program.

9. A method of fabricating an electrical harness (10) for a motor vehicle, **characterized in that** the electrical harness (10) is defined from data of the digital models of each configuration obtained by the method according to any one of claims 1 to 8.
